# EUROPÄISCHE PATENTANMELDUNG

(11) **EP 0 892 289 A2**
(43) Veröffentlichungstag der Anmeldung: **20.01.1999**
(21) Anmeldenummer: 98113128.7
(22) Anmeldetag: 15.07.1998
(51) Int. Cl.: G02B 5/32

(54) **Verwendung eines holographischen Bildschirmes als Darstellungsfläche für Informationssysteme**

(30) Priorität: 17.07.1997 DE 19730565
(71) Anmelder: Daimler-Benz Aktiengesellschaft, 70567 Stuttgart (DE); Eberl, Heinrich A., 87463 Probstried (DE)
(72) Erfinder: Abersfelder, Günter, Dr., 71065 Sindelfingen (DE); Grantz, Helmut, 71067 Sindelfingen (DE); Halldorsson, Thorsteinn, 81276 München (DE); Schmidt-Bischoffshausen,Horst,Dr., 85579 Neubiberg (DE); Uhl, Stefan, Dr., 70597 Stuttgart (DE); Eberl, Heinrich Alexander, 87463 Probstried (DE)

(57) **Zusammenfassung**

Die vorliegende Erfindung betrifft verschiedene Verwendungsmöglichkeiten eines holographischen Bildschirmes als Darstellungsfläche eines Informationssystemes.

## Beschreibung

Die vorliegende Erfindung betrifft Verwendungsmöglichkeiten eines holographischen Bildsschirmes nach den Patentansprüchen 1, 4, 5, 6, 7, 8, 9, 10, 11, 12.

Als Anzeigegeräte und Anzeigebildschirme (Displays) sind bisher verschiedene Ausführungsformen bekannt. Beispielsweise ist es bekannt, Kathodenstrahlröhren einzusetzen, die relative viel Energie verbrauchen und Platz beanspruchen. Weiterhin sind LCD-Displays bekannt. Andere Anzeigemöglichkeiten sind fest montiert und hinsichtlich einer Änderung der Anzeige unflexibel. Außerdem sind Anzeigesysteme bekannt, die zur Bilddarstellung eine aus Gründen guter Rückstreueigenschaften vorzugsweise weiße Projektionsfläche benutzen. Für eine hohe Kontrastleistung ist daher für eine brillante Bilddarstellung zur Vermeidung von Rückstreuungen von Umgebungslicht eine möglichst dunkle Umgebung erforderlich.

Es ist auch in verschiedenem Zusammenhang vorgeschlagen worden, eine holographische Darstellung vorzusehen. Bei dieser letztgenannten Lösung liegt ein Vorteil darin, daß die virtuelle Bilddarstellung auf eine nahezu beliebige Entfernung appliziert werden kann.

Aus den beiden nicht vorveröffentlichen Patentanmeldungen beim Deutschen Patentamt mit den Anmeldenummern 197 00 162.9 und 197 03 592.2 es bekannt, einen holographischen Bildschirm für eine Laseraufprojektion und eine Laserrückprojektion vorzusehen. Dieser Bildschirm ist bei normalem Umgebungslicht schwarz. Für bestimmte Wellenlängen des Lichtes kann dieser Bildschirm jedoch so ausgebildet sein, daß dieses Licht in einen bestimmten Raumwinkel durchgelassen bzw. zurückgelassen wird. Nach den Ausführungen in den beiden Patentanmeldungen muß dieser Bildschirm nicht eben ausgebildet sein. Es ist vielmehr möglich, diesen Bildschirm mit einer nahezu beliebigen Oberflächenkontur auszubilden. Betreffend der Offenbarung des Bildschirmes wird auf diese beiden Anmeldungen Bezug genommen.

Erfindungsgemäß wird gemäß Anspruch 1 ein solcher Bildschirm für holographische Abbildungen, der bei Umgebungslicht schwarz, grau oder farbig erscheint, als Darstellungsfläche eines Informationssystemes verwendet.

Wenn der Bildschirm farbig erscheint, ist es vorteilhaft, wenn er dunkelfarbig erscheint. Dadurch ergibt sich ein guter Kontrast.

Nach Anspruch 2 ist bei der Verwendung eines holographischen Bildschirmes nach Anspruch 1 das Informationssystem ein Computer, wobei die Darstellungsfläche einen Teil des Computers bildet.

Durch die Bilddarstellung in Form eines virtuellen Bildschirmes in einem vordefinierten Abstand wird es ermöglicht, in kurzer Entfernung von da Augen des Betrachters einen Bildschirm anzuordnen, ohne daß Adaptionsprobleme bestehen. Aus diesem Grund ist es möglich, beispielsweise bei einem holographischen Bildschirm von etwa 15 cm Diagonale bei gleichem Blickwinkel den Bildeindruck eines 17-Zoll PC-Bildschirmes in 1 m Abstand wiederzugeben.

Der Bildschirm kann auch für ein größeres Auditorium als größerer Flachbildschirm beispielsweise an der Wand angeordnet werden. Die Bilddarstellung erfolgt vorteilhaft durch Aufprojektion.

Ebenso kann der Bildschirm beispielsweise in die Oberfläche eines Schriebtisches eingelassen sein. Dieses Prinzip verhindert Kontrastminderung durch helles Umgebungslicht.

Gemäß Anspruch 3 ist bei der Verwendung eines holographischen Bildschirmes nach Anspruch 1 das Informationssystem ein Computer, wobei die Darstellungsfläche in einem Gerät untergebracht ist, das mit dem Computer verbunden ist.

Dieses Gerät kann beispielsweise die Tastatur oder das Gehäuse des Computers sein. Dadurch wird der Platzbedarf verringert und Kosten gespart.

Nach Anspruch 4 wird ein solcher holographischer Bildschirm, der bei Umgebungslicht schwarz, grau oder farbig erscheint, als Teil eines Kompaktfernsehers verwendet.

Beispielsweise vermittelt schon ein kleiner transportabler Taschenfernseher durch eine entsprechend weit nach hinten verlegte virtuelle Bildebene des kleinen holographischen Bildschirmes und der damit verbundenen Adaption der Augen den Eindruck eines großen Bildes auch wenn das Gerät sich dicht bei den Augen befindet.

Nach Anspruch 5 wird ein solcher holographischer Bildschirm, der bei Umgebungslicht schwarz, grau oder farbig erscheint, als Teil eines insbesondere tragbaren Telefons verwendet.

Bereits ein sehr kleiner Bildschirm mit einer Diagonalen von etwa 1 Zoll ermöglicht ein Handy-Bildtelefon. Das Hologramm des Bildschirmes muß dabei so ausgebildet sein, daß das virtuelle Bild in ausreichendem Abstand erscheint, wenn das Handy normal am Ohr ist.

Nach Anspruch 6 wird ein solcher holographischer Bildschirm, der bei Umgebungslicht schwarz, grau oder farbig erscheint, als Teil einer Brille zur Darstellung dreidimensionaler Bilder verwendet.

Anders als bei den bekannten Cyberspace-Brillen, die geschlossen sind, kann eine offene Brille mit zwei kleinen holographischen Bildschirm vor den Augen dargestellt werden, bei denen die virtuelle Bildebene ebenfalls in ausreichendem Abstand erscheint. Vorteilhaft ergibt sich ein besserer Tragekomfort. Außerdem ist keine Abkapselung zur Umgebung notwendig. Weiterhin erfordern bekannte Cyberspace-Brillen ein hochwertiges optisches System zum Betrachten der kleinen Bildschirme. Dies kann durch die Vorverlagerung des virtuellen holographischen Bildschirmes eingespart werden.

Nach Anspruch 7 wird ein solcher holographischer Bildschirm, der bei Umgebungslicht schwarz, grau oder farbig erscheint, als Großbildschirm als Anzeigetafel für Sportstadien oder Sporthallen verwendet.

Außerdem kann durch nahtloses Aneinanderfügen einzelner kleinerer gleichartiger holographischer Bildschirme eine beliebig große Bildschirmfläche dargestellt werden. Die Bilddarstellung kann durch Aufprojektion oder durch Rückraumprojektion erfolgen. Auch die Projektion von Teilbildern mit mehreren Projektoren auf entsprechende Teilflächen des Großbildschirmes ist möglich.

Weiterhin kam ein solcher holographischer Bildschirm, der bei Umgebungslicht schwarz, grau oder farbig erscheint, nach den Patentansprüchen 8, 9 und 10 verwendet werden:
- als Großbildschirm für Informationstafeln für Flughäfen, Bahnhöfe und öffentliche Einrichtungen,
- als Großbildschirm für Tageslichtprojektionen und
- als Großbildschirm für Großkinos oder Autokinos.

Nach Anspruch 11 wird ein solcher holographischer Bildschirm, der bei Umgebungslicht schwarz, grau oder farbig erscheint, verwendet zur Realisierung von Bühnenbildern.

Dies eignet sich insbesondere für schnell wechselnde Bühnenbilder, bei denen aufwendige Umbauten entfallen können. Durch diese Bühnenbilder ist also eine variable Kulisse realisierbar für eine Darstellung des Bühnenhintergrundes und für schnelle Wechsel der Bühnengestaltung ohne großes "Kulissenschieben". Dies wird durch eine einfache Auflichtprojektion von geeigneten Dias vom Schnürboden aus auf die leichten und dünnen beweglichen holographischen Projektionsflächen erreicht.

Weiterhin findet ein solcher holographische Bildschirm, der bei Umgebungslicht schwarz, grau oder farbig erscheint, nach Anspruch 12 Verwendung als Teil von Verkehrszeichen wie Autobahnwegweiser, Verkehrsschilder und Ampelanlagen.

Dadurch sind diese auch bei Tageslicht und Sonneneinstrahlung besser erkennbar. Weiterhin kann der Informationsinhalt der Verkehrsschilder und der Autobahnwegweiser durch Software vergleichsweise einfach geändert werden.

Bei dem holographischen Bildschirm kann die Außenform beliebig gestaltet werden. Vorteilhaft entspricht die nutzbare Bildschirmfläche dem Außenmaß des Bildschirmes.

Alles in allem lassen sich durch die genannten Verwendungsmöglichkeiten die Vorteile des holographischen Bildschirmes nutzen, die im folgenden aufgezählt werden sollen:
- keine konkurrierende Reflexion von störendem Fremdlicht,
- volle Kontrastleistung auch bei Tageslicht mit weniger Energieaufwand,
- Unempfindlichkeit für Umgebungslicht,
- die Bildebene des Bildschirmes ist prinzipiell unabhängig vom Anbringungsort,
- die Bildschirmoberfläche ist frei wählbar,
- die Projektionsrichtung ist frei wählbar,
- es besteht eine Richtungsselektivität,
- die Streuwinkel sind einstellbar,
- es sind keine besonderen Anforderungen an den Anbringungsort zu stellen,
- Form und Format der Bildschirmfläche sind frei wählbar und ohne zusätzliche Produktionsmittel dastellbar,
- mehrere gleiche Bildschirmhologramme können zu einer größeren Fläche zusammengefügt werden,
- eine Bildschirmform ist durch einfaches Beschneiden veränderbar.

## Patentansprüche

1. Verwendung eines holographischen Bildschirmes, der bei Umgebungslicht schwarz, grau oder farbig erscheint, als Darstellungsfläche für Informationssysteme.

2. Verwendung eines holographischen Bildschirmes nach Anspruch 1, dadurch gekennzeichnet, daß das Informationssystem ein Computer ist, wobei die Darstellungsfläche einen Teil des Computers bildet.

3. Verwendung eines holographischen Bildschirmes nach Anspruch 1, dadurch gekennzeichnet daß das Informationssystem ein Computer ist, wobei die Darstellungsfläche in einem Gerät untergebracht ist, das mit dem Computer verbunden ist.

4. Verwendung eines holographischen Bildschirmes, der bei Umgebungslicht schwarz, grau oder farbig erscheint, als Teil eines Kompaktfernsehers.

5. Verwendung eines holographischen Bildschirmes, der bei Umgebungslicht schwarz, grau oder farbig erscheint, als Teil eines insbesondere tragbaren Telefons.

6. Verwendung eines holographischen Bildschirmes, der bei Umgebungslicht schwarz, grau oder farbig erscheint, als Teil einer Brille zur Darstellung dreidimensionaler Bilder.

7. Verwendung eines holographischen Bildschirmes, der bei Umgebungslicht schwarz, grau oder farbig erscheint, als Großbildschirm als Anzeigetafel für Sportstadien oder Sporthallen.

8. Verwendung eines holographischen Bildschirmes, der bei Umgebungslicht schwarz, grau oder farbig erscheint, als Großbildschirm für Informationstafeln für Flughäfen, Bahnhöfe und öffentliche Einrichtungen.

9. Verwendung eines holographischen Bildschirmes, der bei Umgebungslicht schwarz, grau oder farbig erscheint, als Großbildschirm für Tageslichtprojektionen.

10. Verwendung eines holographischen Bildschirmes, der bei Umgebungslicht schwarz, grau oder farbig erscheint, als Großbildschirm für Großkinos oder Autokinos.

11. Verwendung eines holographischen Bildschirmes, der bei Umgebungslicht schwarz, grau oder farbig erscheint, zur Realisierung von Bühnenbildern.

12. Verwendung eines holographischen Bildschirmes, der bei Umgebungslicht schwarz, grau oder farbig erscheint, als Teil von Verkehrszeichen wie Autobahnwegweiser, Verkehrsschilder und Ampelanlagen.
